# EUROPEAN PATENT APPLICATION

(11) **EP 3 617 895 A1**
(43) Date of publication of application: **04.03.2020**
(21) Application number: 19189414.6
(22) Date of filing: 31.07.2019
(51) Int. Cl.: G06F 13/40

(54) **BRIDGE DEVICE, CONTROL METHOD FOR BRIDGE DEVICE, AND INFORMATION PROCESSING APPARATUS INCLUDING BRIDGE DEVICE**

(30) Priority: 31.08.2018 JP 2018163191
(71) Applicant: CANON KABUSHIKI KAISHA, Ohta-ku Tokyo 146-8501 (JP)
(72) Inventor: SHINTO, Yasushi, Ohta-ku, Tokyo 146-8501 (JP); YOSHIHARA, Toshio, Ohta-ku, Tokyo 146-8501 (JP); TANAKA, Yasutomo, Ohta-ku, Tokyo 146-8501 (JP); MATSUNAGA, Daisuke, Ohta-ku, Tokyo 146-8501 (JP)
(74) Representative: Houle, Timothy James

(57) **Abstract**

A bridge device according to an aspect of the present invention is configured to communicate with a first device and a second device, the first device being configured to interrupt output of a first clock signal after completion of the output of the data, the second device being controlled based on the data. The bridge device includes an acquisition unit configured to acquire the data based on the first clock signal, a storage unit configured to store the data acquired by the acquisition unit, and an output unit configured to read out the data stored in the storage unit and output the data to the second device. The output unit receives a second clock signal different from the first clock signal input from the first device, and outputs the data based on the second clock signal.

## Description

### BACKGROUND OF THE INVENTION

### Field of the Invention

The present invention relates to a bridge device, a control method for the bridge device, and an information processing apparatus including the bridge device.

### Description of the Related Art

In an information processing apparatus, a memory that stores operation logs and the like for software to be executed by a central processing unit (CPU) via a memory controller is connected to a main bus of a controller.

The memory controller and the memory are connected in accordance with serial interface standards such as a serial peripheral interface (SPI). In this case, the memory controller operates as a master device and the memory operates as a slave device to be controlled by the master device. A communication in accordance with SPI standards is established using a clock signal line for transferring a clock signal and a data signal line for transferring data. The master device supplies a clock signal to the clock signal line and outputs data to the data signal line. The slave device receives the data based on the clock signal input from the master device via the clock signal line.

Japanese Patent Application Laid-Open No. 2013-105284 discusses a technique in which a bridge device is employed to connect a master device and a plurality of slave devices and the master device controls the plurality of slave devices. In an apparatus discussed in Japanese Patent Application Laid-Open No. 2013-105284, a clock signal supplied from the master device is further supplied to the bridge device and the slave devices. The bridge device and the slave devices operate based on the clock signal supplied from the master device.

In the bridge device including a buffer, data input from the master device is stored in the buffer once and the data is read out and output to the slave devices from an output circuit. Accordingly, the speed of outputting data from the output circuit is lower than the speed of inputting data from the master device by the amount corresponding to the data stored in the buffer.

In the bridge device having the configuration described above, assume that data communication is performed in accordance with Quad Serial Peripheral Interface (QSPI) standards. In the communication in accordance with the QSPI standards, the master device interrupts the output of the clock signal upon completion of the input/output of data. Specifically, when the master device completes the input/output of data, the master device interrupts the supply of the clock signal to an input circuit and the output circuit of the bridge device.

If the supply of the clock signal to the output circuit is interrupted when the master device completes the input of data to the input circuit, the supply of the clock signal to the output circuit is interrupted before the output circuit outputs all the data stored in the buffer to the slave devices. Therefore, the output circuit cannot output all the data stored in the buffer to the slave devices.

### SUMMARY OF THE INVENTION

According to a first aspect of the present invention, there is provided a bridge device as specified in claims 1 to 15. According to a second aspect of the present invention, there is provided an information processing apparatus as specified in claim 16. According to a third aspect of the present invention, there is provided a control method as specified in claim 17.

Further features of the present invention will become apparent from the following description of exemplary embodiments with reference to the attached drawings.

### BRIEF DESCRIPTION OF THE DRAWINGS

Fig. 1 is a block diagram illustrating an outline of an information processing apparatus according to an exemplary embodiment of the present invention.
Fig. 2 is a block diagram illustrating a controller unit of the information processing apparatus according to the present exemplary embodiment.
Fig. 3 is a block diagram illustrating details of a Quad Serial Peripheral Interface (QSPI) master device, a QSPI bridge device, and QSPI slave devices according to the present exemplary embodiment.
Fig. 4 is a timing diagram illustrating a write access in accordance with QSPI standards according to the present exemplary embodiment.
Fig. 5 is a timing diagram illustrating a read access in accordance with QSPI standards according to the present exemplary embodiment.
Fig. 6 illustrates an example of a memory map for a QSPI slave device according to the present exemplary embodiment.
Figs. 7A and 7B are timing diagrams illustrating a write access in the QSPI bridge device according to the present exemplary embodiment.
Figs. 8A and 8B are timing diagrams illustrating a read access in the QSPI bridge device according to the present exemplary embodiment.
Figs. 9A and 9B are flowcharts illustrating processing to be executed by the bridge device during a write access according to the present exemplary embodiment.
Figs. 10A and 10B are flowcharts illustrating processing to be executed by the bridge device during a read access according to the present exemplary embodiment.

### DESCRIPTION OF THE EMBODIMENTS

Modes for carrying out the present invention will be described in detail below with reference to the drawings. Configurations illustrated in the following exemplary embodiments are merely examples, and the present invention is not limited to the illustrated configurations. Each of the embodiments of the present invention described below can be implemented solely or as a combination of a plurality of the embodiments or features thereof where necessary or where the combination of elements or features from individual embodiments in a single embodiment is beneficial.

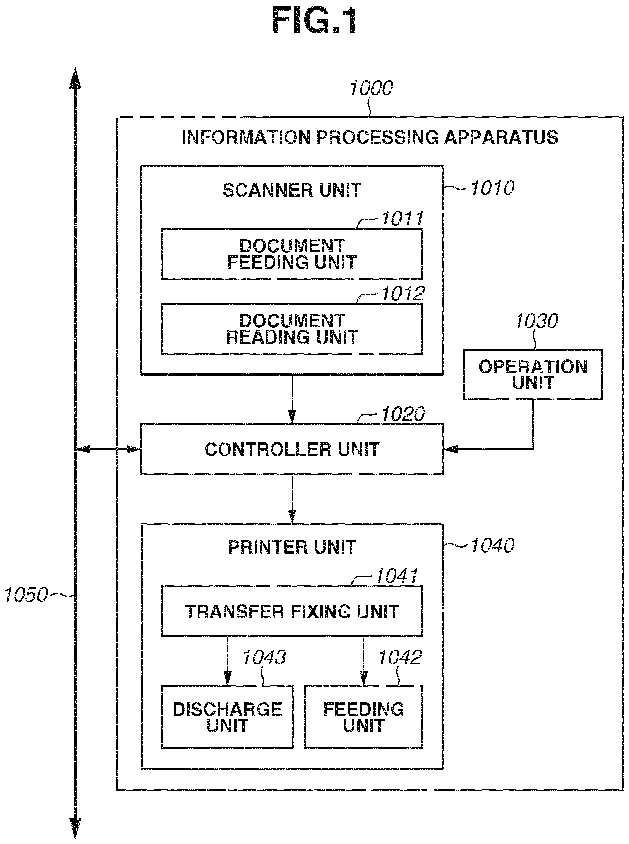

Fig. 1 is a block diagram illustrating an example of a configuration of a digital multifunction peripheral that operates as an information processing apparatus according to an exemplary embodiment of the present invention. A scanner unit 1010 optically scans a document and converts the scanned data into image data. The scanner unit 1010 includes a document reading unit 1012 which contains a laser light source, a lens, and the like for optically scanning a document, and a document feeding unit 1011 which contains a belt and the like for conveying a document. A printer unit 1040 conveys a recording medium (sheet), and prints image data as a visible image on the recording medium. The printer unit 1040 includes a feeding unit 1042 that feeds a sheet, a transfer fixing unit 1041 that transfers and fixes image data onto a sheet, and a discharge unit 1043 that sorts and staples printed sheets, and discharges the sheets to the outside of an information processing apparatus 1000.

A controller unit 1020 is electrically connected to each of the scanner unit 1010 and the printer unit 1040, and is also connected to a network 1050, such as a local area network (LAN), an integrated services digital network (ISDN), the Internet, or an intranet. If a user uses a copy function, the controller unit 1020 controls the scanner unit 1010 to acquire image data scanned from a document, and controls the printer unit 1040 to print an image on a sheet and output the sheet. If the user uses a scan function, the controller unit 1020 controls the scanner unit 1010 to acquire image data scanned from a document and convert the image data into code data, and transmits the code data to a host personal computer (PC) (not illustrated) or the like via the network 1050. If the user uses a print function, the controller unit 1020 converts print data (code data) received from the host PC via the network 1050 into image data, and controls the printer unit 1040 to print an image on a sheet and output the sheet. The information processing apparatus 1000 also includes a facsimile (FAX) reception function for receiving data from an ISDN or the like and printing the data, and a FAX transmission function for transmitting scanned data to the ISDN or the like. An instruction to execute processing in each of the functions is referred to as a job. The information processing apparatus 1000 executes predetermined processing based on jobs corresponding to the respective functions. An operation unit 1030 is a user interface that enables the user to perform an input operation. The operation unit 1030 includes, for example, a touch panel and various buttons.

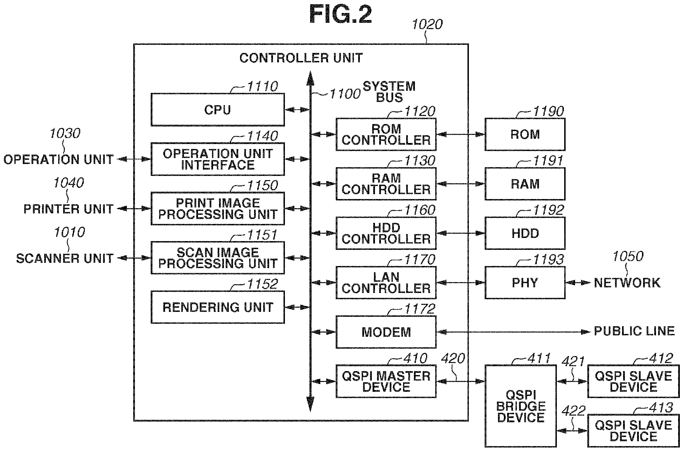

Fig. 2 is a block diagram illustrating an internal configuration of the controller unit 1020 according to the present exemplary embodiment. Elements that constitute the controller unit 1020 will be described below.

A central processing unit (CPU) 1110 is a processor that controls an overall system. The CPU 1110 controls job processing, such as print processing and scan processing, in an integrated manner in accordance with an operating system (OS) and control programs loaded into a random access memory (RAM) 1191.

A read-only memory (ROM) controller 1120 is a control module for accessing a ROM 1190 that stores a system boot program. When a power supply of the information processing apparatus 1000 is turned on, the CPU 1110 accesses the ROM 1190 via the ROM controller 1120 and then the CPU 1110 is booted.

A RAM controller 1130 is a control module for accessing the RAM 1191 that stores a system control program and image data. The RAM controller 1130 includes a register for setting and controlling the RAM 1191. This register is accessible from the CPU 1110. An operation unit interface 1140 controls the reception of an operation instruction made by the user through the operation of the operation unit 1030 and the display of an operation result.

A scan image processing unit 1151 performs image processing for scanner, such as shading correction processing, modulation transfer function (MTF) correction processing, gamma correction processing, and filter processing, on the image data acquired by the scanner unit 1010. The scan image processing unit 1151 includes a function for detecting a synchronization signal having an abnormal cycle due to the influence of electrostatic noise, performing mask processing on the detected synchronization signal having an abnormal cycle, and counting the number of synchronization signals having an abnormal cycle.

A print image processing unit 1150 performs image processing for printing, such as color space conversion processing, halftone processing, and gamma correction processing, for image data to be used by the printer unit 1040. The print image processing unit 1150 performs image processing for printing and outputs the processed image data to the printer unit 1040.

A hard disk drive (HDD) 1192 stores system software, application programs, image data, and page information and job information corresponding to each piece of image data. The HDD 1192 is connected to the system bus 1100 via an HDD controller 1160, and writes or reads data in response to an instruction from the CPU 1110.

A LAN controller 1170 is connected to the network 1050 via a physical layer (PHY) 1193 to input information, such as image data, to an external host computer, or output information, such as image data, from the external host computer.

A modem 1172 is connected to a public line (not illustrated) and performs data communication with an external FAX apparatus during processing such as a FAX transmission job or a FAX reception job. A rendering unit 1152 converts image data (page description language (PDL) data) received from the network 1050 via the LAN controller 1170 into bitmap data that can be used by the printer unit 1040.

A Quad Serial Peripheral Interface (QSPI) master device 410 (a first device) is a control module for accessing QSPI slave devices 412 and 413 (second devices), such as memory devices including a QSPI interface (I/F), via a QSPI bridge device 411. The QSPI master device 410 and the QSPI bridge device 411 are connected with a first QSPI I/F 420.

The QSPI bridge device 411 transfers the data, which is transferred from the QSPI master device 410 via the first QSPI I/F 420, to the QSPI slave devices 412 and 413. The QSPI bridge device 411 is connected to the QSPI slave device 412 via a second QSPI I/F 421. The QSPI bridge device 411 is also connected to the QSPI slave device 413 via a third QSPI I/F 422.

Each of the QSPI slave devices 412 and 413 is a memory device, such as a ferroelectric random memory (FRAM®) or a static random memory (SRAM), which includes a QSPI I/F. In the present exemplary embodiment, the QSPI slave devices 412 and 413 record a log of boot processing executed by the CPU 1110 and program execution logs. While the present exemplary embodiment illustrates an example in which memory devices are used as the QSPI slave devices, the QSPI slave devices are not limited to this example.

In the present exemplary embodiment, the controller unit 1020 is mounted on a first printed circuit board, and the QSPI bridge device 411 and the QSPI slave devices 412 and 413 are mounted on a second printed circuit board.

The present exemplary embodiment illustrates a configuration in which a plurality of QSPI slave devices 412 and 413 can be connected to a single QSPI master device 410 using the QSPI bridge device 411 as illustrated in Fig. 2. Thus, the use of the QSPI bridge device 411 makes it possible to increase the number of QSPI slave devices to be connected to the QSPI master device 410, without changing the configuration of the QSPI master device 410. When a memory, such as an FRAM, is used as each QSPI slave device, the number of QSPI slave devices to be connected can be increased by using the QSPI bridge device 411, which leads to an increase in the capacity of each memory in a pseudo manner.

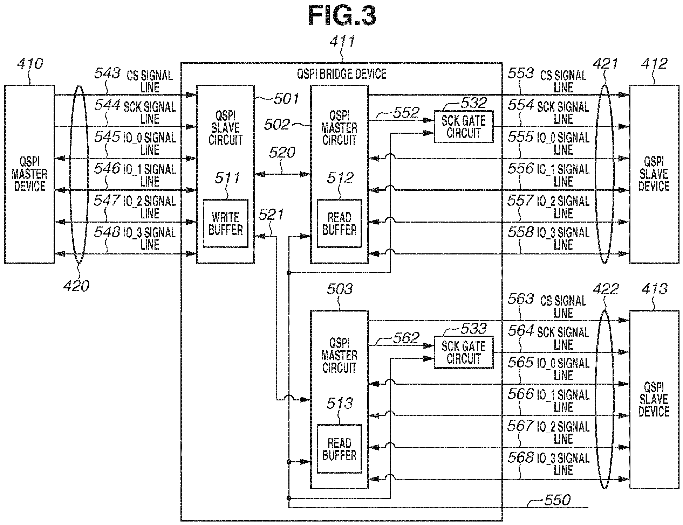

The QSPI master device 410, the QSPI bridge device 411, and the QSPI slave devices 412 and 413 according to the present exemplary embodiment will be described in detail with reference to Fig. 3.

The QSPI bridge device 411 includes a QSPI slave circuit 501 (acquisition means and input means), QSPI master circuits 502 and 503 (output means and reading means), and SCK gate circuits 532 and 533 (control means).

The QSPI master device 410 and the QSPI slave circuit 501 communicate with each other in accordance with QSPI standards using six signal lines as described below.

A CS signal line 543 is a signal line for transmitting a chip select signal to notify start of an access to a device to be accessed from the QSPI master device 410. An SCK signal line 544 is a signal line for transmitting a clock signal (a first clock signal) for synchronizing data transfer performed using an IO_0 signal line 545, an IO_1 signal line 546, an IO_2 signal line 547, and an IO_3 signal line 548. In the communication in accordance with QSPI standards, the clock signal is output only during data transfer. After the data transfer is completed, the QSPI master device 410 negates a CS signal to interrupt the output of the clock signal.

The IO_0 signal line 545, the IO_1 signal line 546, the IO_2 signal line 547, and the IO_3 signal line 548 are signal lines for transferring data between the QSPI master device 410 and the QSPI slave circuit 501.

A write buffer 511 is a buffer (storage means) that temporarily stores data to be written to the QSPI slave devices 412 and 413 when a write access is made from the QSPI master device 410. In the present exemplary embodiment, assume that the QSPI slave circuit 501 includes the write buffer 511 having a capacity corresponding to eight clock signals. The capacity of the write buffer 511 is not limited to the capacity described above.

The QSPI slave circuit 501 and the QSPI master circuit 502 are connected by a signal line 520. The signal line 520 includes a signal line for transferring an operation code obtained by analyzing a signal transferred from the QSPI master device 410, a signal line for transferring an address, a signal line for transferring data stored in the write buffer 511, and the like. The signal line 520 also includes a signal line for transferring a data communication enable signal for controlling the operation of the QSPI master circuit 502. The signal lines included in the signal line 520 are each connected to the buffer of the QSPI slave circuit 501. The QSPI slave circuit 501 writes data to the buffer in synchronization with the clock signal input from the master device 410. The QSPI master circuit 502 reads out data stored in the QSPI slave circuit 501 in synchronization with the clock signal input via an external clock signal line 550, and transfers the data to the slave device 412. In Fig. 3 and the following description, the signal line 520 is expressed in a singular form for ease of explanation. However, the signal line 520 includes a plurality of signal lines as described above.

The QSPI slave circuit 501 and the QSPI master circuit 503 are connected by a signal line 521. The detailed configuration of the signal line 521 is similar to that of the signal line 520, and thus the description thereof is omitted.

The external clock signal line 550 is a signal line for supplying the QSPI master circuit 502 and the QSPI master circuit 503 with a clock signal (a second clock signal) having a frequency different from that of the SCK signal line 544. In the present exemplary embodiment, assume that the frequency of the clock signal to be supplied to the QSPI master circuits 502 and 503 via the external clock signal line 550 is set to be higher than the frequency of the clock signal to be supplied from the QSPI master device 410 to the QSPI slave circuit 501. An oscillator that supplies the clock signal to the external clock signal line 550 is different from an oscillator that supplies the clock signal to the QSPI master device 410.

The QSPI master circuit 502 is connected to the QSPI slave device 412 via the SCK gate circuit 532. The QSPI master circuit 502 and the QSPI slave device 412 transfer data in accordance with QSPI standards. A CS signal line 553, an SCK signal line 554, an IO_0 signal line 555, an IO_1 signal line 556, an IO_2 signal line 557, and an IO_3 signal line 558 are similar to the signal lines provided between the QSPI master device 410 and the QSPI slave circuit 501, and thus the descriptions thereof are omitted.

The SCK gate circuit 532 is a circuit that performs control such that the clock signal output from the QSPI master circuit 502 is gated to prevent the clock signal from being input to the QSPI slave device 412. For example, if the write buffer 511 is empty during a write access from the QSPI master device 410, the SCK gate circuit 532 suspends the supply of the clock signal to the QSPI slave device 412. If a read buffer becomes full during a read access from the QSPI master device 410, the SCK gate circuit 532 interrupts the supply of the clock signal to the QSPI slave device 412.

A read buffer 512 is a buffer that stores read data transferred from the QSPI slave device 412. In the present exemplary embodiment, the read buffer 512 is a buffer having a capacity corresponding to eight clock signals. However, the capacity of the read buffer 512 is not limited to this capacity.

The QSPI master circuit 503 is connected to the QSPI slave device 413 via the SCK gate circuit 533. The QSPI master circuit 503 and the QSPI slave device 413 transfer data in accordance with QSPI standards. The configuration between the QSPI master circuit 503 and the QSPI slave device 413 is similar to the configuration between the QSPI master circuit 502 and the QSPI slave device 412, and thus the description thereof is omitted.

In the QSPI standards, the start and end of data transfer can be controlled only from the master device. Accordingly, for example, in a case where the QSPI master device 410 writes data, even when the write buffer 511 becomes full, the data transfer from the QSPI slave circuit 501 to the QSPI master device 410 cannot be interrupted. Therefore, in the present exemplary embodiment, the frequency of the clock signal to be supplied to the QSPI master circuit 502 is set to be higher than the frequency of the clock signal to be supplied from the QSPI master device 410 to the QSPI slave device 412. Thus, the speed of reading data from the write buffer 511 is higher than the speed of writing data to the write buffer 511. Therefore, it is possible to prevent the write buffer 511 from becoming full. In the present exemplary embodiment, assume that the frequency of an external clock signal is twice as high as the frequency of the clock signal to be supplied to the QSPI slave circuit 501. The external clock may have any frequency as long as the frequency is slightly higher than the frequency of the clock signal to be supplied to the QSPI slave circuit 501.

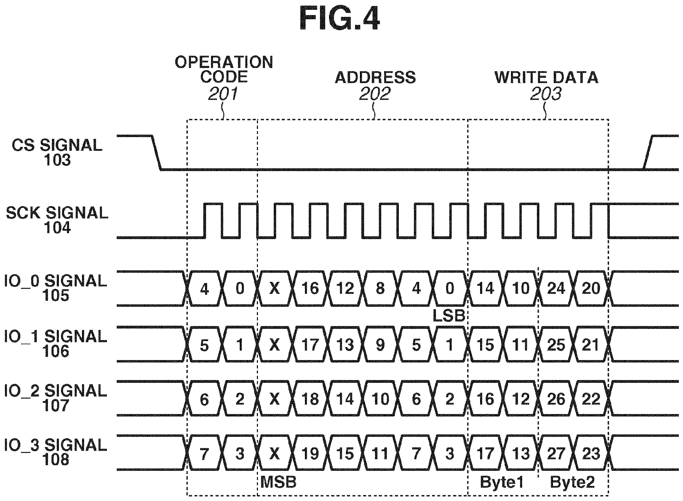

Fig. 4 is a timing diagram illustrating a write access from the master device 410 or the master circuits 502 and 503 to a slave device in accordance with QSPI standards. Each signal set in accordance with QSPI standards includes three phases, i.e., an operation code 201, an address 202, and write data 203. Numbers described in each block indicating data to be transferred via data signal lines represented by an IO_0 signal 105, an IO_1 signal 106, an IO_2 signal 107, and an IO_3 signal 108 indicate an order of bits used when the slave device analyzes data. In the write data 203, a higher-order digit of a number in each block indicates the number of bytes, and a lower-order digit of a number in each block indicates an order for analysis.

The operation code 201 is a signal indicating which processing is executed on the QSPI slave device. The operation code 201 is transmitted in eight bits corresponding to two clock signals after a CS signal 103 is asserted. A least significant bit of a signal transmitted in the phase of the operation code 201 corresponds to the 0th bit of the IO_3 signal 108, and a most significant bit of the signal corresponds to the seventh bit of the IO_0 signal 105.

The address 202 is a signal for designating an address for starting data write. The address 202 is designated by 24 bits corresponding six clock signals which are transmitted subsequently to the operation code 201. Assume herein that the QSPI slave devices 412 and 413 used in the present exemplary embodiment are FRAMs each having a capacity of 512 Kbytes. In other words, the QSPI bridge device 412 is connected with an FRAM having a capacity of 1 Mbyte. Accordingly, in the present exemplary embodiment, the address of each QSPI slave device is designated using 20 bits, i.e., the 0th bit to the 19th bit, in the signal of 24 bits. The QSPI slave device 412 negates signals corresponding to the 20th to 23rd bits. In the present exemplary embodiment, each data location to be negated is indicated by "X".

The write data 203 is a signal indicating data to be stored in the QSPI slave device 412 or 413. In the phase of the write data 203, data to be written can be output consecutively. When write data is output consecutively, the data is written while the address to be accessed from the address designated by the address 202 is sequentially incremented by 1.

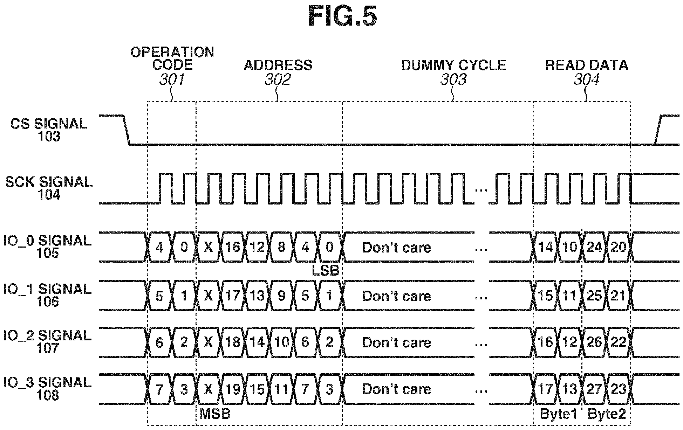

Next, Fig. 5 is a timing diagram illustrating a read access from the master device 410 or the master circuits 502 and 503 to a slave device in accordance with QSPI standards. In read data 304 illustrated in Fig. 5, a higher-order digit of a number in each block indicates the number of bytes, and a lower-order digit of a number in each block indicates an order for analysis when the QSPI master device 410 receives the data.

A read command includes phases of an operation code 301, an address 302, a dummy cycle 303, and the read data 304. The operation code 301 and the address 302 are similar to those of a write command, and thus the descriptions thereof are omitted. The dummy cycle 303 is a phase indicating a waiting time required for a slave circuit or a slave device to read out data. The number of dummy cycles determined by the slave device, which is connected in advance, is set to the master device. The dummy cycle 303 indicates a clock signal having a preset number of cycles when the master device outputs the read command. Even when the master device receives data during the dummy cycle 303, the master device negates the data. In the read data 304, data stored in the address designated by the address 302 is acquired. In the read data 304, data can be acquired consecutively. In this case, data is acquired from the QSPI slave devices 412 and 413, while the address is sequentially incremented by 1 using the address designated by the address 302 as a head address.

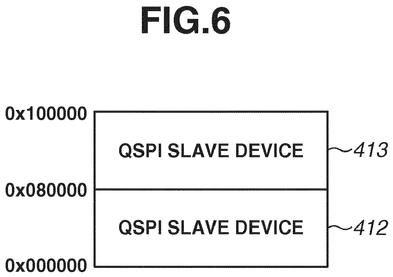

Fig. 6 illustrates relationships between addresses designated in the address phase by the QSPI master device 410 and the QSPI slave devices 412 and 413 corresponding to the respective addresses according to the present exemplary embodiment. In the present exemplary embodiment, each address is represented by hexadecimal numbers. Values 0x0000 to 0x07FFFF indicate addresses corresponding to the QSPI slave device 412. Values 0x080000 to 0x0FFFFF indicate addresses corresponding to the QSPI slave device 413. Specifically, when the 20th bit of data represented by binary numbers is "0", the access is an access to the QSPI slave device 412. When the 20th bit of data represented by binary numbers is "1", the access is an access to the QSPI slave device 413. Thus, in the present exemplary embodiment, consecutive addresses are given to a plurality of QSPI slave devices, respectively. With this configuration, the plurality of QSPI slave devices can be treated as a single QSPI slave device. Specifically, even when an access is made from the QSPI master device 410 to a plurality of QSPI slave devices, the access to the next QSPI slave device can be sequentially switched only by incrementing the address to be accessed.

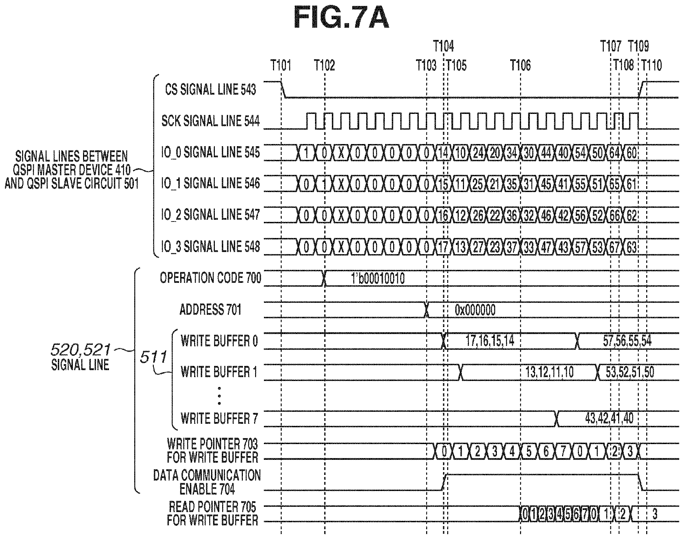

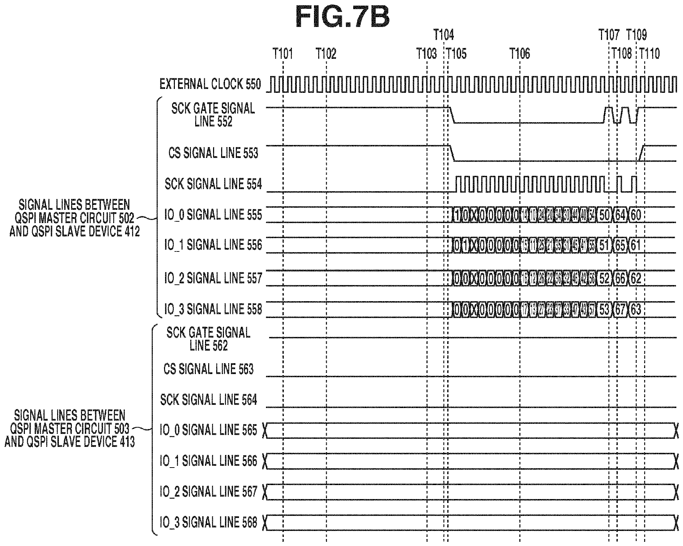

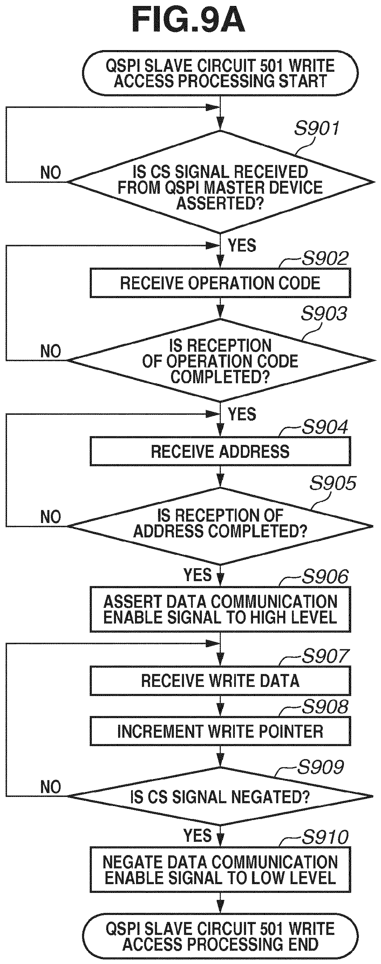

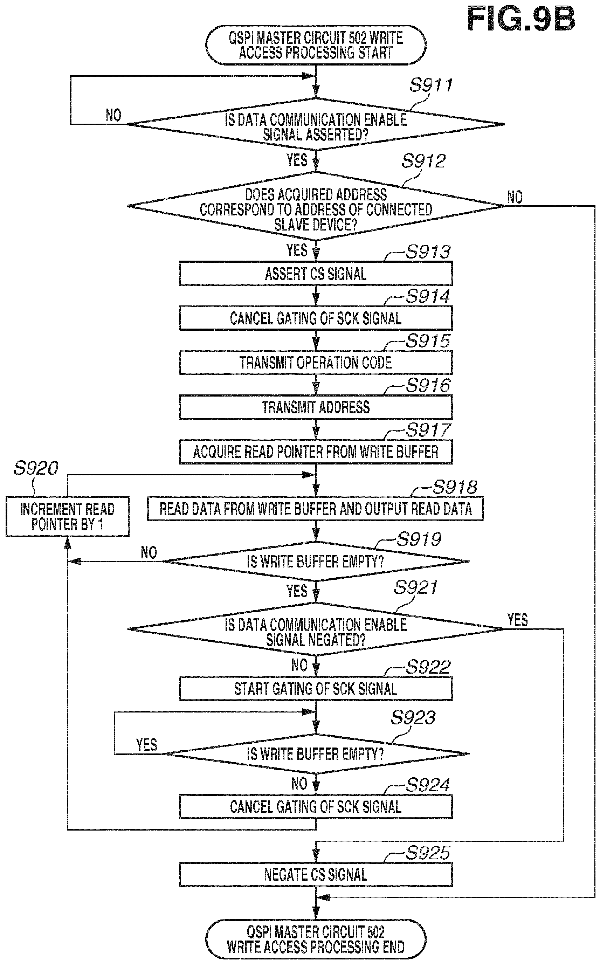

Next, an operation to be performed when the QSPI bridge device 411 accepts a write access from the QSPI master device 410 will be described with reference to Fig. 7A, 7B and Figs. 9A and 9B. Fig. 7A and 7B are timing diagrams when the QSPI bridge device 411 accepts a write access. Figs. 9A and 9B are flowcharts illustrating processing to be executed by the QSPI slave circuit 501 and processing to be executed by the QSPI master circuit 502, respectively, when the QSPI bridge device 411 accepts a write access. The present exemplary embodiment illustrates an example in which a write access is made to the QSPI slave device 412.

The CS signal line 543, the SCK signal line 544, the IO_0 signal line 545, the IO_1 signal line 546, the IO_2 signal line 547, and the IO_3 signal line 548 illustrated in Fig. 7A indicate states of signal lines provided between the QSPI master device 410 and the QSPI slave circuit 501. An operation code 700, an address 701, write data buffers (0 to 7) 511, a write pointer 703, and a data communication enable 704 indicate states of the signal lines 520 and 521 provided between the QSPI slave circuit 501 and the QSPI master circuits 502 and 503. A read pointer 705 for the write buffer is a read pointer to be accessed from the write buffer managed by the QSPI master circuit 502. The external clock signal line 550 indicates an external clock signal to be input to the QSPI master circuits 502 and 503 and the SCK gate circuits 532 and 533. An SCK gate signal line 552 indicates a state of a signal line that connects the QSPI master circuit 502 and the SCK gate circuit 532. The CS signal line 553, the SCK signal line 554, the IO_0 signal line 555, the IO_1 signal line 556, the IO_2 signal line 557, and the IO_3 signal line 558 indicate states of signal lines provided between the QSPI master circuit 502 and the QSPI slave device 412. A CS signal line 563, an SCK signal line 564, an IO_0 signal line 565, an IO_1 signal line 566, an IO_2 signal line 567, an IO_3 signal line 568, and an SCK gate signal line 562 indicate states of signal lines provided between the QSPI master circuit 503 and the QSPI slave device 413.

Fig. 9A is a flowchart illustrating processing to be executed by the QSPI slave circuit 501 during a write access from the QSPI master device 410. Fig. 9B is a flowchart illustrating processing to be executed by the QSPI master circuit 502 during a write access from the QSPI master device 410.

In step S901, the QSPI slave circuit 501 determines whether the CS signal is asserted. Specifically, in step S901, the QSPI slave circuit 501 determines whether the voltage level of the CS signal line 543 is a low level. At time T101, the QSPI master device 410 asserts the CS signal to the low level. The QSPI slave circuit 501 detects that the CS signal is asserted to the low level, and then the processing proceeds to step S902.

In step S902, the QSPI slave circuit 501 receives an operation code and stores the received operation code in a buffer (not illustrated). The buffer that stores the operation code is different from the write buffer 511.

In step S903, the QSPI slave circuit 501 determines whether the reception of the operation code is completed. If the reception of data corresponding to two clock signals is completed after the CS signal is asserted (YES in step S903), the processing proceeds to step S904. If the reception of data corresponding to two clock signals is not completed (NO in step S903), the processing returns to step S902 to receive the operation code. At time T102, the QSPI slave circuit 501 completes the reception of the operation code. At time T102, the QSPI slave circuit 501 analyzes the operation code and outputs the operation code 700.

In step S904, the QSPI slave circuit 501 receives an address and stores the received address in a buffer (not illustrated). The buffer that stores the address is different from the buffer that stores the operation code, and is also different from the write buffer. After the reception of the address is completed, the QSPI slave circuit 501 stores the received operation code in a buffer. In step S905, the QSPI slave circuit 501 determines whether the reception of the address is completed. After the reception of the operation code is completed, if data corresponding to six clock signals is received, the QSPI slave circuit 501 determines that the reception of the address is completed (YES in step S905), and the processing proceeds to step S906. If the reception of data corresponding to six clock signals is not completed (NO in step S905), the processing returns to step S904. At time T103, the QSPI slave circuit 501 completes the reception of the operation code. The QSPI slave circuit 501 outputs the received address 701 to the signal lines 520 and 521.

In step S906, the QSPI slave circuit 501 asserts the data communication enable signal to a high level. At time T104 after the CS signal is asserted to the low level and data corresponding to eight clock signals is received, the QSPI slave circuit 501 sets the voltage level of the data communication enable 704 to the high level. As a result, the data communication enable signal is asserted. The data communication enable signal is a signal indicating that the QSPI master circuits 502 and 503 may access the QSPI slave circuit 501.

In step S907, the QSPI slave circuit 501 receives write data from the QSPI master device 410. The QSPI slave circuit 501 receives write data in synchronization with the clock signal, and writes the data to a buffer indicated by the write pointer 703 for the write buffer. In step S908, the QSPI slave circuit 501 increments the write pointer 703. In this case, if the write pointer indicates "7", the write pointer is set to "0". The write data buffers 0 to 7 store four-bit data corresponding to the IO_0 signal line 545, the IO_1 signal line 546, and the IO_2 signal line 547.

In step S909, the QSPI slave circuit 501 determines whether the CS signal is negated. The QSPI slave circuit 501 determines whether the voltage level of the CS signal line 543 is the high level. If the voltage level of the CS signal line 543 is the high level, the QSPI slave circuit 501 determines that the CS signal is negated (YES in step S909) and then the processing proceeds to step S910. If the CS signal is not negated (NO in step S909), the processing returns to step S907. In the present exemplary embodiment, the CS signal is negated at time T109. When the CS signal is negated, in step S910, the QSPI slave circuit 501 sets the voltage level of the data communication enable 704 to the low level and negates the data communication enable signal. At time T109, the QSPI slave circuit 501 sets the voltage level of the data communication enable 704 to the low level. Thus, the access from the QSPI slave devices 412 and 413 to the QSPI master circuits 502 and 503 can be interrupted.

Next, processing to be executed by the QSPI master circuit 502 will be described with reference to Fig. 9B.

In step S911, the QSPI master circuit 502 determines whether the data communication enable signal is asserted. The QSPI master circuit 502 executes the processing illustrated in step S911 until the voltage level of the data communication enable 704 via the signal line 520 becomes the high level. When the voltage level of the data communication enable 704 becomes the high level at time T105, the QSPI master circuit 502 executes processing illustrated in step S912.

In step S912, the QSPI master circuit 502 acquires the address 701 input via the signal line 520 and determines whether the acquired address corresponds to an address for selecting the connected QSPI slave device 412. In step S912, the QSPI master circuit 502 preliminarily stores the value corresponding to the 19th bit of the address of the QSPI slave device 412 connected to the QSPI master circuit 502. Then, the QSPI slave device 412 determines whether the access is an access to the QSPI slave device 412 by referring to the value of the 19th bit of the received address. If the slave device designated by the address 701 is different from the slave device connected to the QSPI master circuit 502 (NO in step S912), the QSPI master circuit 502 completes the processing illustrated in Fig. 9B.

If the slave device designated by the address 701 is identical to the slave device connected to the QSPI master circuit 502 (YES in step S912), the processing proceeds to step S913. In step S913, the QSPI master circuit 502 asserts the CS signal. At time T105, the QSPI master circuit 502 sets the voltage level of the CS signal line 543 to the low level. When the voltage level of the CS signal line 553 is set to the low level, the supply of the clock signal and data to the QSPI slave device 412 is started.

After asserting the CS signal, in step S914, the QSPI master circuit 502 cancels gating of the clock signal by the SCK gate circuit 532. The QSPI master circuit 502 sets the voltage level of the SCK gate signal line 552 to the low level and negates the SCK gate signal. As a result, the supply of the clock signal to the QSPI slave device 412 is started.

In step S915, the QSPI master circuit 502 outputs an operation code to the QSPI slave device 412 via the IO_0 signal line 555, the IO_1 signal line 556, the IO_2 signal line 557, and the IO_3 signal line 558. The QSPI master circuit 502 acquires the operation code 700 via the signal line 520, and outputs the operation code in two clock signals via four signal lines.

In step S916, the QSPI master circuit 502 outputs an address to the QSPI slave device 412 via the IO_0 signal line 555, the IO_1 signal line 556, the IO_2 signal line 557, and the IO_3 signal line 558. The QSPI master circuit 502 acquires the address 701 through the signal line 520 and outputs the address 701 to the QSPI slave device 412.

In step S917, the QSPI master circuit 502 acquires the value of the read pointer 705 when data is read out from the write buffer 511. At time T106 after the CS signal is asserted and the operation code and the address are received, the QSPI master circuit 502 acquires the read pointer 705. In step S918, the QSPI master circuit 502 reads out data from the write buffer 511 in accordance with the pointer acquired in step S917, and outputs write data to the slave device 412 via the IO_0 signal line 555, the IO_1 signal line 556, the IO_2 signal line 557, and the IO_3 signal line 558.

In step S920, the QSPI master circuit 502 increments the value of the read pointer 705 for the write buffer by 1. If the set read pointer indicates "7", the QSPI master circuit 502 sets the read pointer to "0". Then, the processing is returned to step S918.

In step S919, if it is determined that the write buffer 511 is empty (YES in step S919), the processing proceeds to step S921. In step S921, the QSPI master circuit 502 determines whether the data communication enable signal is negated. If the voltage level of the data communication enable 704 is the low level, the QSPI master circuit 502 determines that the data communication enable signal is negated.

In step S921, if the data communication enable signal is not negated (NO in step S921), the QSPI master device 410 is in the process of transferring data. Accordingly, the QSPI master circuit 502 executes processing illustrated in the following steps S922 to S924.

In step S922, the QSPI master circuit 502 controls the SCK gate circuit 532 to gate the clock signal to be supplied to the QSPI slave device 412. As a result, the transfer of data to the QSPI slave device 412 is suspended.

In step S923, the QSPI master circuit 502 determines again whether the write buffer 511 is empty. The QSPI master circuit 502 acquires a write pointer and a read pointer and compares the acquired write pointer with the acquired read pointer. If the values of the write pointer and the read pointer match, the QSPI master circuit 502 determines that the write buffer 511 is empty. If the write pointer and the read pointer indicate different values, the QSPI master circuit 502 determines that data that has not been read out is stored in the write buffer 511, and thus determines that the write buffer 511 is not empty. For example, at time T108 illustrated in Fig. 7A, the read pointer and the write pointer indicate the same value. Accordingly, at time T108, the QSPI master circuit 502 determines that data that has not been read out is not stored in the write buffer 511 and thus the write buffer 511 is empty. The QSPI master circuit 502 does not supply any clock signal to the QSPI slave device 412, and waits until data is accumulated in the write buffer 511. After data that has not been read out is accumulated in the write buffer 511, the QSPI master circuit 502 resumes the supply of the clock signal to the QSPI slave device 412 and also resumes writing of data to the QSPI slave device 412.

If the write buffer 511 is empty (YES in step S923), the QSPI master circuit 502 repeatedly executes the processing of step S923. If there is no data to be read out in the write buffer 511, the supply of the clock signal to the QSPI slave device 412 is interrupted until the data to be read out is accumulated in the write buffer 511.

If the write buffer 511 is not empty (NO in step S923), the processing proceeds to step S924. In step S924, the QSPI master circuit 502 controls the SCK gate circuit 532 to cancel gating of the clock signal to the QSPI slave device 412, and resumes the supply of the clock signal. After the supply of the clock signal is resumed, the processing proceeds to step S920.

In step S921, if the data communication enable signal is negated (YES in step S921), the processing proceeds to step S925. In step S925, the QSPI master circuit 502 sets the voltage level of the CS signal line 553 to the high level and negates the CS signal. When all the data stored in the write buffer 511 is read out and the transfer of write data by the QSPI master device 410 is completed, it is determined that the data transfer to the QSPI slave device 412 is completed. Accordingly, the QSPI master circuit 502 negates the CS signal between the QSPI master circuit 502 and the QSPI slave device 412 and terminates the communication between the QSPI master circuit 502 and the QSPI slave device 412.

In the present exemplary embodiment, the frequency of the clock signal to be supplied from the QSPI master circuit 502 to the QSPI slave device 412 is set to be higher than the frequency of the clock signal to be supplied from the QSPI master device 410 to the QSPI slave circuit 501. Thus, the speed of reading data from the write buffer 511 is higher than the speed of writing of data to the write buffer 511 by the QSPI master circuits 502 and 503. Therefore, it is possible to prevent data from being accumulated in the write buffer 511 and overflow therefrom before being read out. On the other hand, there may be a case where writing of data cannot catch up with reading of the data from the write buffer 511, and the write buffer 511 may be empty. Accordingly, the supply of the clock signal to the QSPI slave device is temporarily interrupted and the transfer of data to the QSPI slave device is suspended. After data is accumulated in the write buffer 511, the transfer of data to the QSPI slave device is resumed.

While Fig. 9B illustrates processing to be executed by the QSPI master circuit 502, the processing illustrated in Fig. 9B is also executed by the QSPI master circuit 503. When the QSPI master circuit 503 executes the processing illustrated in Fig. 9B, the QSPI master circuit 503 determines whether the address received in step S912 corresponds to the address indicating the QSPI slave device 413.

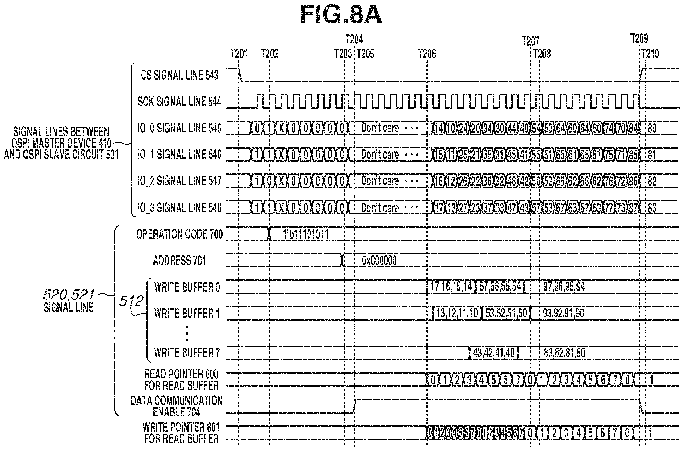

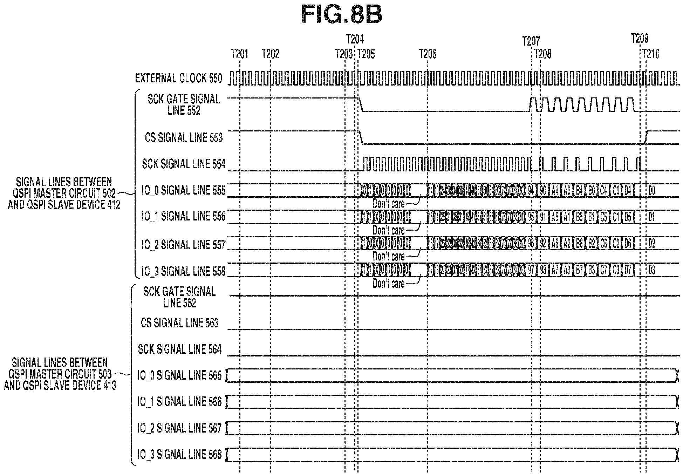

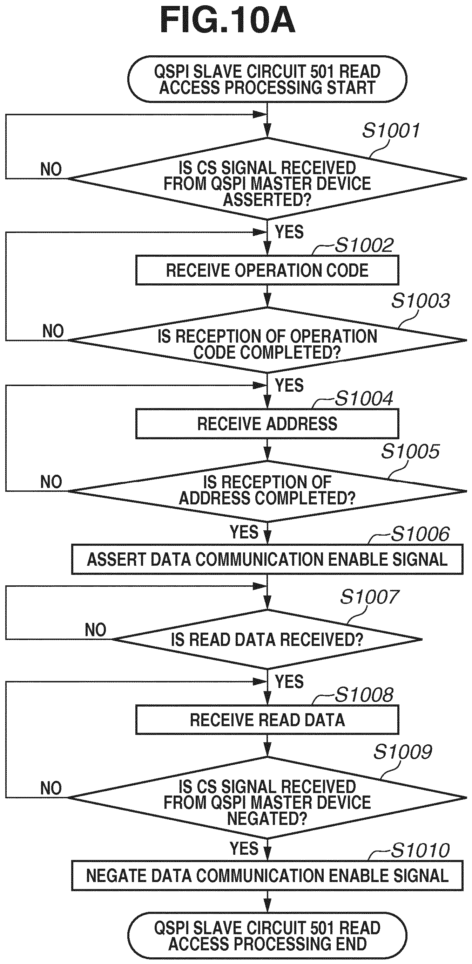

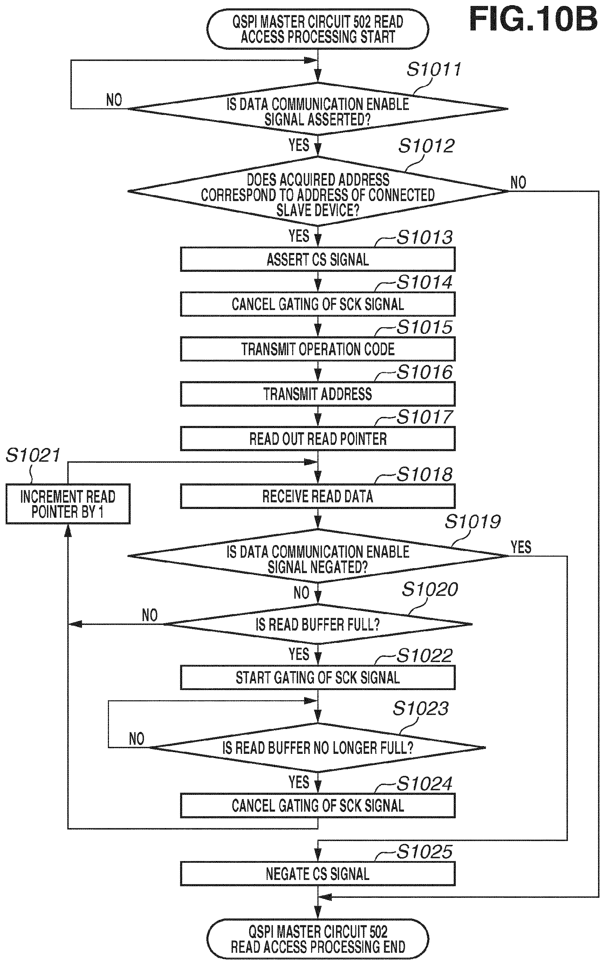

Next, processing to be performed by the QSPI bridge device 411 during a read access will be described in detail with reference to Figs. 8A and 8B and Figs. 10A and 10B. Figs. 8A and 8B are timing diagrams illustrating a processing flow when a read command is issued from the QSPI master device 410. In the present exemplary embodiment, the QSPI master device 410 reads out data from the QSPI slave device 412.

A read pointer 800 from the read buffer illustrated in Fig. 8A is a pointer indicating a buffer to be accessed when data stored in the read buffer 512 of the QSPI master circuit 503 is read out. A write pointer 801 for the read buffer is a pointer indicating a buffer to be accessed when data is stored in the read buffers 512 and 513 of the QSPI master circuits 502 and 503, respectively.

Fig. 10A is a flowchart illustrating processing to be executed by the QSPI slave circuit 501 when the QSPI master device 410 issues a read command.

In step S1001, the QSPI slave circuit 501 determines whether the CS signal is asserted. At time T201, the QSPI master device 410 sets the voltage level of the CS signal line to the low level so as to start a read operation on the QSPI bridge device 411. When the CS signal is asserted (YES in step S1001), the processing proceeds to step S1002.

In step S1002, the QSPI slave circuit 501 receives an operation code from the QSPI master device 410 via the IO_0 signal line 545, the IO_1 signal line 546, the IO_2 signal line 547, and the IO_3 signal line 548. The QSPI slave circuit 501 receives the operation code and stores the operation code in a buffer (not illustrated). In step S1003, the QSPI slave circuit 501 determines whether the reception of the operation code is completed. If the reception of the operation code is completed (YES in step S1003), the processing proceeds to S1004. If the reception of the operation code is not completed (NO in step S1003), the processing returns to step S1002 and the QSPI slave circuit 501 receives the operation code again. At time T202, the QSPI slave circuit 501 completes the reception of the operation code from the QSPI master device 410. Further, the QSPI slave circuit 501 holds the received operation code and outputs the operation code 700 to the QSPI master circuits 502 and 503 via the signal lines 520 and 521, respectively.

In step S1004, the QSPI slave circuit 501 receives an address from the QSPI master device 410. The QSPI slave circuit 501 stores the received address 701 in a buffer (not illustrated) and outputs the address 701 to the QSPI master circuits 502 and 503 via the signal lines 520 and 521, respectively. In step S1005, the QSPI slave circuit 501 determines whether the reception of the address is completed. At time T203, the QSPI slave circuit 501 completes the reception of the address. The QSPI slave circuit 501 analyzes the received address and determines whether the device designated by the address corresponds to the QSPI slave device 412 or the QSPI slave device 413. In the subsequent process, when the QSPI slave circuit 501 reads out data from the read buffer, the data is read out from the read buffer of the QSPI master circuit connected to the QSPI slave device discriminated in step S1005.

In step S1006, the QSPI slave circuit 501 asserts the data communication enable signal at time T204. The QSPI slave circuit 501 sets the voltage level of the data communication enable 704 to the high level. In step S1007, the QSPI slave circuit 501 determines whether read data is received from the QSPI slave devices 412 and 413 via the signal lines 520 and 521, respectively. The QSPI slave circuit 501 repeatedly executes the processing illustrated in step S1007 until the read data is received. In other words, the QSPI slave circuit 501 executes the processing illustrated in step S1007 during a dummy cycle. If the QSPI slave circuit 501 receives the read data (YES in step S1007), the processing proceeds to step S1008. In step S1008, the QSPI slave circuit 501 transmits the received read data to the QSPI master device 410 via the IO_0 signal line 545, the IO_1 signal line 546, the IO_2 signal line 547, and the IO_3 signal line 548.

In step S1009, the QSPI slave circuit 501 determines whether the CS signal output from the QSPI master device 410 is negated. When the voltage level of the CS signal line 543 is the high level, the QSPI slave circuit 501 determines that the CS signal is negated (YES in step S1009) and then the processing proceeds to step S1010. In step S1010, the QSPI slave circuit 501 negates the data communication enable signal. After the QSPI master device 410 negates the CS signal at time T209, the QSPI slave circuit 501 sets the voltage level of the data communication enable 704 to the low level at time T210.

Fig. 10B is a flowchart illustrating processing to be executed by the QSPI master circuit 502.

In step S1011, the QSPI master circuit 502 determines whether the data communication enable signal is asserted. In step S1011, when the voltage level of the data communication enable 704 is the high level, the QSPI master circuit 502 determines that the data communication enable signal is asserted. At time T205, the QSPI master circuit 502 executes the processing illustrated in step S1009 until the data communication enable 704 is asserted.

After it is determined that the data communication enable signal is asserted (YES in step S1011), the processing proceeds to step S1012. In step S1012, the QSPI master circuit 502 determines whether the address 701 received via the signal line 520 corresponds to the address for designating the connected QSPI slave device 412. If the address 701 received via the signal line 520 corresponds to the address for designating the QSPI slave device 412 (YES in step S1012), the processing proceeds to step S1013. If the address 701 received via the signal line 520 does not correspond to the address for designating the QSPI slave device 412 (NO in step S1012), the processing illustrated in Fig. 10B is terminated.

In step S1013, the QSPI master circuit 502 asserts the CS signal. At time T205, the QSPI master circuit 502 sets the voltage level of the CS signal line 543 to the low level and asserts the CS signal. In step S1014, the QSPI master circuit 502 sets the voltage level of the SCK gate signal line 552 to the low level and asserts the SCK gate signal.

In step S1015, the QSPI master circuit 502 transmits an operation code to the QSPI slave device 412 via the IO_0 signal line 555, the IO_1 signal line 556, the IO_2 signal line 557, and the IO_3 signal 558. In step S1016, the QSPI master circuit 502 transmits an address to the QSPI slave device 412 via the IO_0 signal line 555, the IO_1 signal line 556, the IO_2 signal line 557, and the IO_3 signal 558. Then, in step S1017, the QSPI master circuit 502 reads out the write pointer when an access is made to the read buffer 512. At time T206, the write pointer 801 for the read buffer is acquired.

In step S1018, the QSPI master circuit 502 receives read data from the QSPI slave device 412 and stores the received read data in the read buffer 512 indicated by the write pointer read out in step S1017. In the present exemplary embodiment, assume that three dummy cycles are set when a read command is issued. However, the number of dummy cycles to be set is not limited to the number of cycles described above.

In step S1019, the QSPI master circuit 502 determines whether the data communication enable signal is negated. If the QSPI master circuit 502 determines that the voltage level of the data communication enable 704 is the low level, the QSPI master circuit 502 determines that the data communication enable signal is negated. When it is determined that the data communication enable signal is negated (YES in step S1019), the access from the QSPI master device 410 is completed, and thus the QSPI master circuit 502 completes the processing illustrated in Fig. 10B.

If the data communication enable signal is not negated (NO in step S1019), the processing proceeds to step S1020. In step S1020, the QSPI master circuit 502 determines whether the read buffer is full. The QSPI master circuit 502 compares the value of the write pointer 801 with the value of the read pointer 800 when an access is made to the read buffer 512. If the values of the write pointer 801 and the read pointer 800 match, the QSPI master circuit 502 determines that the read buffer 512 is full. If the read buffer 512 is not full (NO in step S1020), the processing proceeds to step S1021. In step S1021, the QSPI master circuit 502 increments the value of the write pointer by 1.

If the read buffer is full (YES in step S1020), the processing proceeds to step S1022. In step S1022, the QSPI master circuit 502 negates the SCK signal and controls the SCK signal to be prevented from being input to the QSPI slave device 412. For example, at time T207, the values of the write pointer and the read pointer for the read buffer 512 match. The QSPI master circuit 502 determines that the read buffer 512 is full and sets the voltage level of the SCK gate signal line 552 to the high level. In this manner, the QSPI master circuit 502 performs control such that the clock signal is prevented from being input to the QSPI slave device 412.

In step S1023, the QSPI master circuit 502 determines whether the read buffer is full. In step S1023, the QSPI master circuit 502 compares the values of the write pointer and the read pointer for the read buffer 512. If the value of the write pointer and the read pointer match, the QSPI master circuit 502 determines that the read buffer 512 is full.

When the read buffer 512 is no longer full (YES in step S1023), the processing proceeds to step S1024. In step S1024, the QSPI master circuit 502 sets the voltage level of the SCK gate signal line 552 to the low level and cancels gating of the clock signal by the SCK gate circuit 532. As a result, the clock signal is supplied to the QSPI slave device 412 again. For example, when the read pointer and the write pointer indicate different values, the QSPI master circuit 502 determines that the read buffer 512 is not full. That is, the read buffer 512 can store data read out from the QSPI slave device 412. In this case, the QSPI master circuit 502 cancels gating of the clock signal to the QSPI slave device 412 and resumes reading of the read data.

In step S1019, if the data communication enable signal is negated (YES in step S1019), the processing proceeds to step S1025. In step S1025, the QSPI master circuit 502 sets the voltage level of the CS signal line 553 to the high level and negates the CS signal. Thus, the processing illustrated in Figs. 10A and 10B is completed.

In the present exemplary embodiment, the QSPI master circuits 502 and 503 are supplied with a clock signal having a frequency higher than that of the clock signal to be supplied to the QSPI slave circuit 501. Accordingly, the speed of reading data from the read buffers 512 and 513 is lower than the speed of writing data to the read buffer when the QSPI master device 410 issues a read request. In addition, there is a case where the read buffers 512 and 513 become full by data that has not been read out. Accordingly, if the read buffers 512 and 513 become full by data that has not been read out, the QSPI master circuits 502 and 503 suspend the supply of the clock signal to the QSPI slave devices 412 and 413. Then, the QSPI master circuits 502 and 503 suspend reading of data from the QSPI slave devices 412 and 413, and execute only reading of data from the read buffer 512 by the QSPI slave circuit 501. This configuration can prevent data from being lost due to the accumulation of an excess amount of data in the read buffers 512 and 513.

As described above, when the QSPI master device and the QSPI slave devices are connected using the bridge device, a clock signal different from the clock signal to be supplied from the QSPI master device is supplied to the QSPI slave devices. Further, the clock signal to be supplied to the QSPI slave devices is continuously supplied at least during a period in which the bridge device and the QSPI slave devices transfer data. This configuration enables the bridge device to transfer all the stored data to the QSPI slave devices.

Further, the bridge device supplies the QSPI slave devices with a clock signal having a frequency higher than that of the clock signal supplied from the QSPI master device. This configuration enables transfer of the data, which is transferred to the bridge device, to the QSPI slave devices, while preventing each buffer in the bridge device from overflowing with data transferred from the QSPI master device.

### <Other Exemplary Embodiments>

The exemplary embodiments described above illustrate an example in which the processing illustrated in Figs. 9A and 9B and Figs. 10A and 10B is executed using the QSPI slave circuit 501 and the QSPI master circuits 502 and 503. Alternatively, a CPU may control the bridge device to execute the processing.

The present invention can also be implemented by executing the following processing. That is, software (program) for implementing the functions according to the exemplary embodiments described above is supplied to a system or an apparatus via a network or various storage media, and a computer (or a CPU, a micro processing unit (MPU), etc.) of the system or the apparatus reads out a program code and executes the program code. In this case, the computer program and storage media storing the computer program constitute the present invention.

A bridge device according to an exemplary embodiment of the present invention is capable of outputting all data received by a bridge circuit from a master device to slave devices even when the master device interrupts the supply of a clock signal after completion of output of data.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A bridge device (411) configured to communicate with a first device (410) and a second device (412, 413), the first device (410) being configured to output a first clock signal (544) and data and interrupt the output of the first clock signal (544) based on completion of the output of the data, the second device (412, 413) being controlled based on the data output from the first device (410), the bridge device (411) comprising:
acquisition means (501) configured to acquire the data output from the first device (410) based on the first clock signal (544) input from the first device (410);
storage means (511) configured to store the data acquired by the acquisition means (501); and
output means (502, 503) configured to output the data stored in the storage means to the second device (412, 413),
wherein the output means (502, 503) receives a second clock signal (550) different from the first clock signal (544) input from the first device (410), and outputs the data based on the second clock signal (550).

2. The bridge device according to claim 1, wherein, during output of the data to the second device (412, 413), the output means (502, 503) outputs, to the second device (412, 413), the second clock signal (550) different from the first clock signal input from the first device (410).

3. The bridge device according to claim 2, wherein the output means (502, 503) interrupts the output of the second clock signal (550) to the second device (412, 413) based on completion of the output of the data to the second device (412, 413).

4. The bridge device according to any one of claims 1 to 3, wherein the second clock signal (550) to be supplied to the output means (412, 413) is a clock signal supplied by a clock supply means different from that of the first clock signal (544) which is supplied to the acquisition means (501) from the first device (410).

5. The bridge device according to any one of claims 1 to 4, wherein the storage means (511) stores the data input from the first device (410) at a timing when the first clock signal (544) input from the first device (410) rises.

6. The bridge device according to any one of claims 1 to 5, wherein the second clock signal (550) input to the output means (502, 503) is a clock signal having a frequency higher than the frequency of the first clock signal (544) input from the first device (501).

7. The bridge device according to any one of claims 1 to 6,
wherein the second device (412, 413) is a memory device,
wherein the acquisition means (501) acquires, from the first device (410), data to be written to the second device (412, 413), and
wherein the output means (502, 503) outputs the data to be written to the second device (412, 413).

8. The bridge device according to claim 7, further comprising:
reading means (502, 503) for reading out data from the second device (412, 413); and
input means (501) for input the data read out from the reading means (502, 503) to the first device (410).

9. The bridge device according to any one of claims 1 to 8,
wherein the bridge device is configured to connect to a plurality of the second devices (412, 413), and
wherein the output means (502, 503) supplies the second clock signal to each of the second devices.

10. The bridge device according to any one of claims 1 to 9, further comprising control means (532, 533) for controlling supply of the second clock signal (550) from the output means (502, 503) to the second device.

11. The bridge device according to claim 10, wherein the control means (532, 533) controls supply of the second clock signal (550) to the second device (412, 413) based on an address input from the first device (410).

12. The bridge device according to claim 11, wherein the control means (532, 533) interrupts the supply of the second clock signal (550) to the second device (412, 413) that is not designated by the address input from the first device (410).

13. The bridge device according to any one of claims 1 to 12, wherein the second clock signal (550) is a clock signal to be used by the second device (412, 413) to receive the data output from the output means (502, 503).

14. The bridge device according to any one of claims 1 to 13, wherein the storage means (511) stores an address input from the first device (410).

15. The bridge device according to any one of claims 1 to 14, wherein the storage means (511) stores an operation code input from the first device (410).

16. An information processing apparatus comprising a bridge device according to any one of claims 1 to 15.

17. A control method for a bridge device (411) configured to communicate with a first device (410) and a second device (412, 413), the first device (410) being configured to output a first clock signal (544) and data and interrupt the output of the first clock signal (544) based on completion of the output of the data, the second device (412, 413) being controlled based on the data output from the first device (410), the control method comprising:
acquiring the data output from the first device (410) based on the first clock signal (544) input from the first device (410);
storing the acquired data; and
outputting the stored data to the second device (412, 413),
wherein the data is output based on a second clock signal (550) different from the first clock signal (544) input from the first device (410).
